# FASCICULE DE BREVET EUROPEEN

(11) **EP 0 818 639 B1**
(45) Date de publication et mention de la délivrance du brevet: **18.04.2001**
(21) Numéro de dépôt: 97401647.9
(22) Date de dépôt: 09.07.1997
(51) Int. Cl.: F16F 13/10

(54) **Dispositif antivibratoire hydraulique**
Hydraulische Dämpfungsvorrichtung
Hydraulic damping device

(30) Priorité: 12.07.1996 FR 9608747
(43) Date de publication de la demande: 14.01.1998
(73) Titulaire: HUTCHINSON, 75008 Paris (FR)
(72) Inventeur: Mellon, Paul, 28200 Chateaudun (FR)
(74) Mandataire: Burbaud, Eric

(56) Documents cités:
- EP-A- 0 209 883
- EP-A- 0 278 054
- EP-A- 0 286 527
- EP-A- 0 306 752
- EP-A- 0 307 741
- EP-A- 0 346 227
- EP-A- 0 354 381
- EP-A- 0 409 707
- DE-A- 3 731 479
- FR-A- 2 536 143
- FR-A- 2 714 947

## Description

La présente invention est relative aux dispositifs antivibratoires hydraulique destinés à être interposés, aux fins d'amortissement et de liaison, entre deux éléments rigides tels qu'un châssis et un moteur de véhicule.

L'invention concerne plus particulièrement, parmi ces dispositifs, ceux qui comportent :
- des première et deuxième armatures rigides solidarisables respectivement avec les deux éléments rigides à réunir,
- un corps en élastomère qui présente sensiblement une forme de cloche s'étendant selon un axe central entre d'une part un sommet solidaire de la première armature et d'autre part une base annulaire solidaire de la deuxième armature,
- une chambre de travail délimitée partiellement par le corps en élastomère,
- une chambre de compensation délimitée partiellement par une paroi en élastomère aisément déformable,
- un passage étranglé faisant communiquer les deux chambres entre elles, ces deux chambres ainsi que le passage étranglé étant remplis de liquide,
- un clapet de découplage disposé entre les deux chambres, ce clapet présentant deux faces radiales qui sont en communication chacune avec l'une des deux chambres, et ledit clapet étant déplaçable avec un faible débattement parallèlement à l'axe central,
- et une cloison rigide qui sépare les deux chambres et qui est en contact étanche avec la base annulaire du corps en élastomère, cette cloison présentant d'une part une partie centrale ajourée qui est obturée par le clapet et d'autre part une partie périphérique qui délimite le passage étranglé, lequel passage étranglé s'étend angulairement autour de l'axe central sur une longueur linéaire supérieure au périmètre de la cloison rigide et comporte d'une part un premier canal situé dans un plan voisin de la chambre de travail et d'autre part un deuxième canal situé dans un plan voisin de la chambre de compensation, le premier canal s'étendant en arc de cercle entre d'une part une première extrémité qui communique avec la chambre de travail et d'autre part une deuxième extrémité qui communique avec le deuxième canal, et le deuxième canal s'étendant lui-même en arc de cercle entre d'une part une première extrémité qui communique avec la deuxième extrémité du premier canal et d'autre part une deuxième extrémité qui communique avec la chambre de compensation.

Un tel dispositif antivibratoire hydraulique est divulgué par exemple dans le document FR-A-2 714 947.

Les dispositifs connus de ce type donnent toute satisfaction, mais présentent l'inconvénient d'avoir une cloison qui inclut deux coques rigides constituées par des pièces métalliques de fonderie, chacune de ces coques incluant une unique gorge en arc de cercle qui délimite l'un des canaux du passage étranglé.

La présence de ces deux pièces de fonderie, relativement lourdes et coûteuses, tend à augmenter à la fois le poids global et le coût global du dispositif antivibratoire.

La présente invention a notamment pour but de pallier cet inconvénient.

A cet effet, selon l'invention, un dispositif antivibratoire hydraulique du genre en question est essentiellement caractérisé en ce que le passage étranglé est délimité par une coque rigide unique appartenant à la cloison rigide, cette coque rigide présentant un bord périphérique épais qui comporte des première et deuxième faces opposées dans lesquelles sont creusées respectivement des première et deuxième gorges s'étendant en arc de cercle, les première et deuxième faces du bord périphérique de la coque rigide étant orientées axialement respectivement vers la chambre de travail et vers la chambre de compensation, et ces deux faces étant serrées axialement en contact étanche entre des première et deuxième portées annulaires solidaires de la deuxième armature, ces portées annulaires fermant axialement au moins partiellement respectivement les première et deuxième gorges en formant ainsi les premier et deuxième canaux du passage étranglé.

Grâce à ces dispositions, il suffit d'une seule coque rigide pour délimiter à la fois les premier et deuxième canaux du passage étranglé, en coopérant avec deux portées annulaires qui peuvent être constituées par des pièces très simples telles que des plaques ou des rondelles planes, ou qui peuvent même être constituées par des surfaces annulaires de certaines pièces du dispositif antivibratoire hydraulique ne faisant pas spécifiquement partie de la cloison qui sépare les deux chambres l'une de l'autre.

Le dispositif antivibratoire selon l'invention est donc à la fois léger et peu coûteux.

Dans des modes de réalisation préférés, on peut éventuellement avoir recours en outre à l'une et/ou à l'autre des dispositions suivantes :
- la coque rigide est une pièce métallique de fonderie moulée ;
- la coque rigide comporte, au centre de son bord périphérique épais, une grille qui délimite partiellement un logement de clapet contenant le clapet de découplage, lequel clapet de découplage est emprisonné dans ce logement par une première plaque rigide sensiblement plane qui présente d'une part une partie centrale ajourée en correspondance avec le clapet de découplage et d'autre part une partie périphérique constituant l'une des deux portées annulaires serrées axialement contre le bord périphérique de la coque rigide ;
- le dispositif comporte en outre une deuxième plaque rigide sensiblement plane qui forme également l'une des deux portées annulaires serrées axialement contre le bord périphérique de la coque rigide, les première et deuxième plaques rigides étant disposées de part et d'autre de la coque rigide ;
- la deuxième portée annulaire est constituée par une rondelle métallique solidarisée avec le pourtour de la paroi en élastomère délimitant la chambre de compensation ;
- la deuxième armature inclut un rebord radial annulaire qui est serré axialement contre la deuxième face du bord périphérique épais de la coque rigide en constituant la deuxième portée annulaire, la paroi en élastomère qui délimite la chambre de compensation comportant par ailleurs une zone périphérique qui est interposée entre cette deuxième portée annulaire et la deuxième face du bord périphérique de la coque rigide ;
- la base annulaire du corps en élastomère présente un épaulement qui constitue la première portée annulaire.

D'autres caractéristiques et avantages de l'invention apparaîtront au cours de la description détaillée suivante de plusieurs de ses formes de réalisation, données à titre d'exemples non limitatifs, en regard des dessins joints.

Sur les dessins :
- la figure 1 est une vue en coupe axiale d'un dispositif antivibratoire hydraulique selon une première forme de réalisation de l'invention,
- la figure 2 est une vue en coupe selon la ligne II-II de la figure 1,
- et les figures 3 à 5 sont des demi-vues en coupe axiale de trois variantes du dispositif de la figure 1.

Sur les différentes figures, les mêmes références désignent des éléments identiques ou similaires.

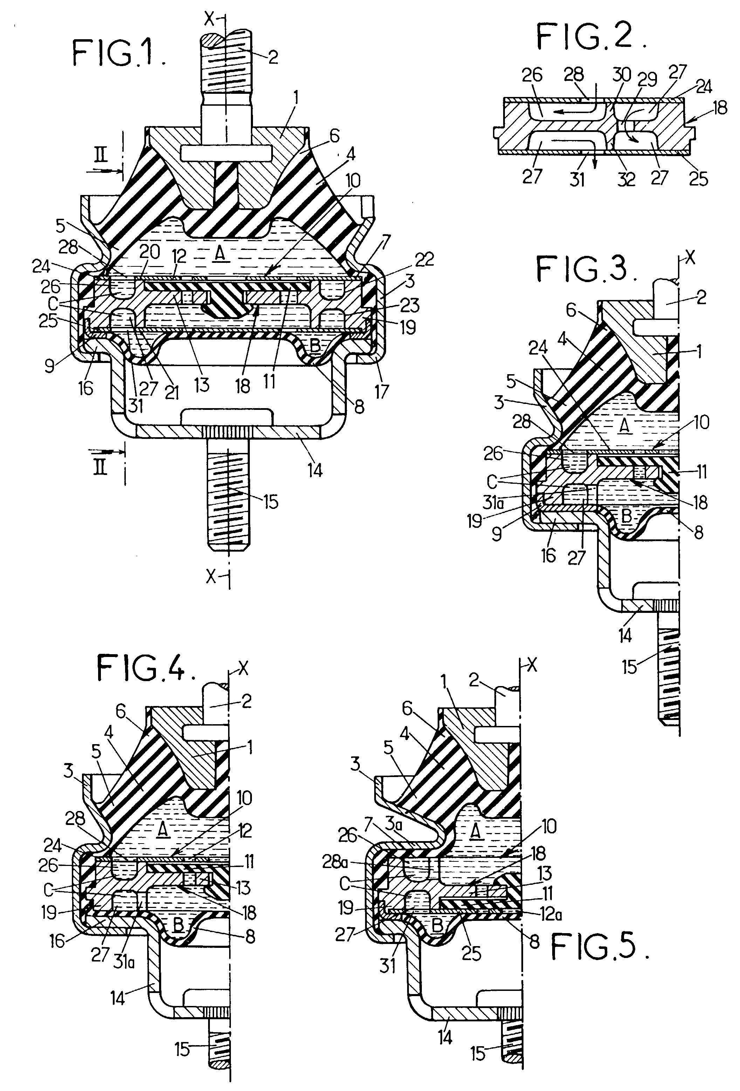

Par ailleurs, dans la description qui suit, les termes tels que "haut", "bas", "inférieur", "supérieur", "vertical", "horizontal" sont utilisés dans le seul but de rendre plus simple et plus claire la description, en se référant à la position d'utilisation habituelle du dispositif de l'invention, mais ces termes ne sont pas limitatifs. Le dispositif antivibratoire hydraulique représenté sur les figures 1 et 2 comporte, de façon connue en soi :
- une embase métallique rigide 1 solidaire d'un goujon métallique 2 en attente dirigé vers le haut selon un axe vertical X,
- un anneau métallique rigide 3 centré sur l'axe X,
- un corps en élastomère 4 qui relie de façon étanche l'embase 1 à l'anneau 3 en étant adhérisé à ces deux pièces, ce corps en élastomère présentant une forme de cloche qui s'étend selon l'axe X entre d'une part une base annulaire 5 solidaire de l'anneau 3 et d'autre part un sommet 6 solidaire de l'embase 1, ce corps en élastomère étant constitué par une paroi suffisamment épaisse pour présenter une bonne résistance à la compression axiale, de façon à jouer un rôle de support lorsque l'embase 1 est reliée par exemple à une partie de moteur de véhicule automobile tandis que l'anneau 3 est relié au châssis du véhicule, et la base annulaire 5 du corps en élastomère formant au moins un épaulement annulaire 7 orienté axialement vers le bas,
- un soufflet 8 mince et flexible, qui est réalisé en élastomère et qui est relié de façon étanche à l'anneau 3, en délimitant un boîtier fermé avec cet anneau et le corps en élastomère 4, le pourtour de ce soufflet 8 étant surmoulé, dans l'exemple considéré, sur une bague métallique rigide 9,
- une cloison métallique rigide 10, horizontale, qui divise le boîtier en deux chambres, savoir une chambre de travail A du côté du corps en élastomère 4 et une chambre de compensation B du côté du soufflet 8,
- un passage étranglé C, reliant en permanence les chambres A et B, ce passage étranglé étant ménagé dans le pourtour de la cloison intermédiaire 10, les deux chambres ainsi que le passage étranglé étant remplies d'un liquide, le passage étranglé C permettant des transferts de liquide entre les chambres A et B lorsque l'embase 1 et l'anneau 3 sont soumis à des mouvements axiaux relatifs de basse fréquence (par exemple inférieure à 20Hz) et de grande amplitude (par exemple supérieure à 0,5 mm), et ces mouvements vibratoires étant ainsi amortis par le canal C,
- un clapet 11, dit de "découplage", destiné à absorber les vibrations axiales de relativement grande fréquence (par exemple supérieure à 20Hz) et de faible amplitude (par exemple inférieure à 0,5 mm) entre l'embase 1 et l'anneau 3, ce clapet étant constitué par une plaquette en élastomère montée avec un faible jeu axial entre deux grilles 12, 13 formées au centre de la cloison intermédiaire 10, de façon que l'amplitude des débattements axiaux du clapet soit limitée à une valeur faible, par exemple de l'ordre de 0,5 mm, le clapet 11 étant en contact étanche contre l'une ou l'autre des grilles 12, 13 lorsqu'il est en butée contre cette grille,
- et un capot métallique rigide 14 qui recouvre le soufflet 8 de façon à le protéger et qui est solidaire d'un goujon 15 en attente, ce capot 14 comportant un rebord annulaire radial 16 qui est serré axialement contre la cloison 10 par sertissage de l'extrémité inférieure 17 de l'anneau 3, la bague 9 étant interposée axialement entre la cloison 10 et le rebord 16.

Selon l'invention, le canal étranglé C est délimité par une coque rigide unique 18 appartenant à la cloison rigide 10, cette coque rigide pouvant être avantageusement une pièce de fonderie moulée, par exemple en aluminium, ou encore une pièce moulée en matière plastique, ou autres.

Cette coque rigide présente un bord périphérique épais 19 qui comprend lui-même des première et deuxième faces 20, 21 orientées axialement respectivement vers la chambre de travail A et la chambre de compensation B.

Dans les première et deuxième faces 20, 21 sont creusées respectivement des première et deuxième gorges 22, 23 s'étendant chacune angulairement en arc de cercle autour de l'axe X.

Par ailleurs, la coque rigide 18 est encadrée par des première et deuxième plaques métalliques rigides 24, 25, de forme plane, qui sont disposées respectivement au contact de la chambre de travail A et de la chambre de compensation B, l'ensemble de la coque rigide 18 et des deux plaques 24, 25 étant serré axialement entre d'une part l'épaulement 7 formé à la base du corps en élastomère 4 et d'autre part le rebord 16 du capot 14, tenu par le sertissage de la partie inférieure 17 de l'anneau 3.

La première plaque rigide 24 inclut dans sa partie centrale la grille 12 susmentionnée, et la périphérie de cette plaque 24 forme une portée annulaire qui est appliquée en contact étanche contre la première face 20 du bord épaissi 19 de la coque rigide, en délimitant avec la première gorge 22 un premier canal annulaire 26.

De même, la deuxième plaque 25 est ajourée en son centre, pour faire communiquer le clapet 11 avec la chambre de compensation B, et la périphérie de cette plaque est appliquée en contact étanche contre la deuxième face 21 du bord 19 de la coque rigide, en délimitant avec la deuxième gorge 23 un deuxième canal annulaire 27.

Le premier canal 26 s'étend angulairement en arc de cercle entre d'une part une première extrémité qui communique avec la chambre de travail A par l'intermédiaire d'un orifice 28 ménagé dans la plaque 24, et d'autre part, une deuxième extrémité qui communique avec le deuxième canal 27 par l'intermédiaire d'un orifice 29 ménagé dans la coque rigide 18, les première et deuxième extrémités du premier canal 26 étant séparées l'une de l'autre par une cloison radiale 30 faisant partie de la coque rigide 18.

De même, le deuxième canal 27 s'étend angulairement en arc de cercle entre une première extrémité qui communique avec l'orifice 29, et d'autre part une deuxième extrémité qui communique avec la chambre de compensation B par l'intermédiaire d'un orifice 31 ménagé dans la plaque 25, ces première et deuxième extrémités étant séparées par une cloison radiale 32 faisant partie de la coque rigide 18.

Grâce à ces dispositions, on peut obtenir de façon simple et peu coûteuse un passage étranglé C de grande longueur, qui s'étend angulairement sur plus d'un tour et au maximum sur près de deux tours.

On peut ainsi obtenir un amortissement maximum à une fréquence relativement basse, dite "fréquence de calage", cette fréquence de calage étant inversement proportionnelle à la longueur du passage étranglé C.

On notera que la deuxième extrémité du canal 27 pourrait éventuellement communiquer avec la chambre de compensation B par un orifice radial (similaire à l'orifice 31a des figures 3 et 4) en plus de l'orifice 31.

Dans les variantes de réalisation représentées sur les figures 3 à 5, le dispositif antivibratoire hydraulique est similaire au dispositif déjà décrit en regard des figures 1 et 2, de sorte que ce dispositif ne sera pas décrit à nouveau en détail. Seules les différences entre ces variantes de réalisation et la forme de réalisation représentée sur les figures 1 et 2 seront donc décrites ci-après.

Dans la variante représentée sur la figure 3, le dispositif antivibratoire se distingue simplement du dispositif des figures 1 et 2 par le fait que la plaque 25 est supprimée, le canal 27 étant fermé axialement par la couronne 9 qui est solidaire du pourtour du soufflet 8, et la deuxième extrémité du canal 27 communiquant avec la chambre de compensation B par un orifice 31a ouvert radialement vers l'intérieur.

Dans la variante représentée sur la figure 4, le dispositif antivibratoire est conformé de la même façon que dans la variante de la figure 3, à ceci près que la couronne métallique 9 est supprimée, le canal 27 étant fermé axialement par le rebord 16 du capot 14, et le pourtour du soufflet 8 étant interposé et serré axialement entre ce rebord 16 et le pourtour 19 de la coque rigide 18.

Enfin, dans la variante représentée sur la figure 5, le dispositif antivibratoire se distingue du dispositif des figures 1 et 2 par les points suivants :
- la plaque rigide 24 est supprimée,
- le clapet 11 est emprisonné entre la grille 13 et une grille 12a formée au centre de la plaque rigide 25,
- le canal 26 est fermé axialement par l'épaulement 7 du corps en élastomère, lequel épaulement est maintenu serré axialement contre le pourtour 19 de la coque rigide par une paroi radiale 3a appartenant à l'anneau 3,
- et la première extrémité du canal 26 communique avec la chambre de travail A par l'intermédiaire d'un orifice 28a qui débouche radialement vers l'intérieur dans la chambre A.

On notera qu'au lieu d'utiliser un clapet en élastomère libre tel que celui décrit ci-dessus, il serait possible d'utiliser un clapet en élastomère dont le pourtour serait adhéré à la cloison 10, les déplacements du clapet étant alors obtenus grâce à sa souplesse.

## Revendications

1. Dispositif antivibratoire hydraulique destiné à être interposé entre deux éléments rigides et comportant :
- des première et deuxième armatures rigides (1; 3, 14) solidarisables respectivement avec les deux éléments rigides à réunir,
- un corps en élastomère (4) qui présente sensiblement une forme de cloche s'étendant selon un axe central (X) entre d'une part un sommet (6) solidaire de la première armature (1) et d'autre part une base annulaire (5) solidaire de la deuxième armature (3, 14),
- une chambre de travail (A) délimitée partiellement par le corps en élastomère (4),
- une chambre de compensation (B) délimitée partiellement par une paroi en élastomère (8) aisément déformable,
- un passage étranglé (C) faisant communiquer les deux chambres entre elles, ces deux chambres ainsi que le passage étranglé étant remplis de liquide,
- un clapet de découplage (11) disposé entre les deux chambres (A, B), ce clapet présentant deux faces radiales qui sont en communication chacune avec l'une des deux chambres, et ledit clapet étant déplaçable avec un faible débattement parallèlement à l'axe central (X),
- et une cloison rigide (10) qui sépare les deux chambres (A, B) et qui est en contact étanche avec la base annulaire (5) du corps en élastomère, cette cloison présentant d'une part une partie centrale ajourée (12, 13) qui est obturée par le clapet et d'autre part une partie périphérique (19) qui délimite le passage étranglé (C), lequel passage étranglé s'étend angulairement autour de l'axe central (X) sur une longueur linéaire supérieure au périmètre de la cloison rigide et comporte d'une part un premier canal (26) situé dans un plan voisin de la chambre de travail (A) et d'autre part un deuxième canal (27) situé dans un plan voisin de la chambre de compensation (B), le premier canal (26) s'étendant en arc de cercle entre d'une part une première extrémité qui communique avec la chambre de travail (A) et d'autre part une deuxième extrémité qui communique avec le deuxième canal (27), et le deuxième canal (27) s'étendant lui-même en arc de cercle entre d'une part une première extrémité qui communique avec la deuxième extrémité du premier canal et d'autre part une deuxième extrémité qui communique avec la chambre de compensation (B),
**caractérisé en ce que** le passage étranglé (C) est délimité par une coque rigide unique (18) appartenant à la cloison rigide, cette coque rigide présentant un bord périphérique épais (19) qui comporte des première et deuxième faces opposées (20, 21) dans lesquelles sont creusées respectivement des première et deuxième gorges (22, 23) s'étendant en arc de cercle, les première et deuxième faces (20, 21) du bord périphérique de la coque rigide étant orientées axialement respectivement vers la chambre de travail (A) et vers la chambre de compensation (B), et ces deux faces étant serrées axialement en contact étanche entre des première (24 ; 7) et deuxième (25 ; 9 ; 16) portées annulaires solidaires de la deuxième armature, ces première et deuxième portées annulaires fermant axialement au moins partiellement respectivement les première et deuxième gorges (22, 23) en formant ainsi les premier et deuxième canaux (26, 27) du passage étranglé.

2. Dispositif selon la revendication 1, dans lequel la coque rigide (18) est une pièce métallique de fonderie moulée.

3. Dispositif selon l'une quelconque des revendication 1 et 2, dans lequel la coque rigide (18) comporte, au centre de son bord périphérique épais, une grille (13) qui délimite partiellement un logement de clapet contenant le clapet de découplage (11), lequel clapet de découplage est emprisonné dans ce logement par une première plaque rigide (24 ; 25) sensiblement plane qui présente d'une part une partie centrale ajourée (12 ; 12a) en correspondance avec le clapet de découplage et d'autre part une partie périphérique constituant l'une des deux portées annulaires serrées axialement contre le bord périphérique (19) de la coque rigide.

4. Dispositif selon la revendication 3, comportant en outre une deuxième plaque rigide (25) sensiblement plane qui forme également l'une des deux portées annulaires serrées axialement contre le bord périphérique (19) de la coque rigide, les première et deuxième plaques rigides (24, 25) étant disposées de part et d'autre de la coque rigide.

5. Dispositif selon l'une quelconque des revendications précédentes, dans lequel la deuxième portée annulaire est constituée par une rondelle métallique (9) solidarisée avec le pourtour de la paroi en élastomère (8) délimitant la chambre de compensation.

6. Dispositif selon l'une quelconque des revendications 1 à 5, dans lequel la deuxième armature (3, 15) inclut un rebord radial annulaire (16) qui est serré axialement contre la deuxième face du bord périphérique épais de la coque rigide en constituant la deuxième portée annulaire, la paroi en élastomère (8) qui délimite la chambre de compensation comportant par ailleurs une zone périphérique qui est interposée entre cette deuxième portée annulaire (16) et la deuxième face (21) du bord périphérique de la coque rigide.

7. Dispositif selon l'une quelconque des revendications 1 à 3, dans lequel la base annulaire (5) du corps en élastomère présente un épaulement (7) qui constitue la première portée annulaire.

## Claims

1. A hydraulic antivibration device for interposing between two rigid elements, and comprising:
• first and second rigid strength members (1; 3, 14) suitable for connecting respectively to the two rigid elements that are to be united;
• an elastomer body (4) that is substantially bell-shaped, extending about a central axis (X) between a top (6) secured to the first strength member (1) and an annular base (5) secured to the second strength member (3, 14);
• a working chamber (A) partially defined by the elastomer body (4);
• a compensation chamber (B) partially defined by an easily-deformable elastomer wall (8);
• a narrow passage (C) putting the two chambers into communication with each other, the two chambers and the narrow passage being filled with liquid;
• a decoupling flap (11) disposed between the two chambers (A, B), said flap having two radially-extending faces each in communication with a respective one of the two chambers, and said flap being movable through a small amount of clearance parallel to the central axis (X); and
• a rigid partition (10) separating the two chambers (A, B) and in sealed contact with the annular base (5) of the elastomer body, said partition having an open central portion (12, 13) closed by the flap and a peripheral portion (19) which defines the narrow passage (C), which narrow passage extends angularly around the central axis (X) over a circumferential length greater than the perimeter of the rigid partition and includes both a first channel (26) situated in a plane close to the working chamber (A) and a second channel (27) situated in a plane close to the compensation chamber (B), the first channel (26) extending over a circular arc between a first end in communication with the working chamber (A) and a second end in communication with the second channel (27), and the second channel (27) itself extending over a circular arc between a first end in communication with the second end of the first channel and a second end in communication with the compensation chamber (B);
characterized in that the narrow passage (C) is defined by a single rigid shell (18) belonging to the rigid partition, said rigid shell having a thick peripheral edge (19) which includes first and second opposite faces (20, 21) in which the first and second grooves (22, 23) extending over circular arcs are respectively hollowed out, the first and second faces (20, 21) of the peripheral edge of the rigid shell facing axially respectively towards the working chamber (A) and towards the compensation chamber (B), and said two faces being axially clamped in sealed contact between first and second annular bearing surfaces (24, 7; 25, 9, 16) secured to the second strength member, said first and second annular bearing surfaces axially closing at least in part the first and second grooves (22, 23) respectively, thereby forming the first and second channels (26, 27) of the narrow passage.

2. A device according to claim 1, in which the rigid shell (18) is a metal casting.

3. A device according to claim 1 or 2, in which the rigid shell (18) includes, in the center of its thick peripheral edge, a grid (13) which partially defines a flap housing containing the decoupling flap (11), which decoupling flap is held captive in the housing by a first substantially plane rigid plate (24; 25) having an open central portion (12; 12a) in coincidence with the decoupling flap and a peripheral portion constituting one of the two annular bearing surfaces clamped axially against the peripheral edge (19) of the rigid shell.

4. A device according to claim 3, further including a second substantially plane rigid plate (25) which likewise forms one of the two annular bearing surfaces axially clamped against the peripheral edge (19) of the rigid shell, the first and second rigid plates (24, 25) being disposed on either side of the rigid shell.

5. A device according to any preceding claim, in which the second annular bearing surface is constituted by a metal washer (9) secured to the periphery of the elastomer wall (8) defining the compensation chamber.

6. A device according to any one of claims 1 to 5, in which the second strength member (3, 15) has an annular radial rim (16) which is axially clamped against the second face of the thick peripheral edge of the rigid shell, thereby constituting the second annular bearing surface, the elastomer wall (8) which defines the compensation chamber also including a peripheral zone which is interposed between said second annular bearing surface (16) and the second face (21) of the peripheral edge of the rigid shell.

7. A device according to any one of claims 1 to 3, in which the annular base (5) of the elastomer body has a shoulder (7) which constitutes the first annular bearing surface.

## Patentansprüche

1. Hydraulische Dämpfungsvorrichtung zur Anordnung zwischen zwei starren Elementen mit:
ersten und zweiten starren Mänteln (1; 3, 14), die mit den beiden zu verbindenden starren Elementen verbunden werden können;
einem Körper (4) aus elastomerem Material, der weitgehend die Form einer Glocke aufweist, die entlang einer Mittelachse (X) zwischen einerseits der Spitze (6) des ersten Mantels (1) und andererseits einer Ringbasis (5) des zweiten Mantels (3, 14) verläuft;
einer teilweise von dem Körper (4) aus elastomerem Material begrenzten Arbeitskammer (A);
einer teilweise von einer leicht verformbaren Wand (8) aus elastomerem Material begrenzten Ausgleichskammer (B);
einer Einschnürung (C) zur Verbindung der beiden Kammern miteinander, wobei die beiden Kammern sowie die Einschnürung mit Flüssigkeit gefüllt sind;
einem zwischen den beiden Kammern (A, B) angeordneten Trennventil (11) mit zwei radialen Flächen, die jeweils mit einer der beiden Kammern in Verbindung stehen, wobei das Trennventil parallel zur Mittelachse (X) leicht verschiebbar ist; und
einer die beiden Kammern (A, B) voneinander trennenden und in dichtem Kontakt mit der Ringbasis (5) des Körpers aus elastomerem Material befindlichen starren Trennwand (10), die einerseits eine vom Ventil verschlossene mittlere Ausnehmung (12, 13) und andererseits einen die Einschnürung (C) begrenzenden Randbereich (19) aufweist, wobei die Einschnürung über eine gerade Länge, die größer ist als der Umfang der starren Trennwand, winklig um die Mittelachse (X) verläuft und einerseits einen in einer der Arbeitskammer (A) benachbarten Ebene befindlichen ersten Kanal (26) und andererseits einen in einer der Ausgleichskammer (B) benachbarten Ebene befindlichen zweiten Kanal (27) aufweist, wobei der erste Kanal (26) kreisbogenförmig zwischen einerseits einem mit der Arbeitskammer (A) verbundenen ersten Ende und andererseits einem mit dem zweiten Kanal (27) in Verbindung stehenden zweiten Ende verbunden ist, und wobei der zweite Kanal (27) selbst kreisbogenförmig zwischen einerseits einem mit dem zweiten Ende des ersten Kanals verbundenen ersten Ende und andererseits einem mit der Ausgleichskammer (B) verbundenen zweiten Ende in Verbindung steht;
dadurch gekennzeichnet, dass
die Einschnürung (C) durch eine der starren Trennwand zugehörige einzelne starre Schale (18) begrenzt wird, die einen umlaufenden Dichtrand (19) mit ersten und zweiten gegenüberliegenden Oberflächen (20, 21) aufweist, in denen kreisbogenförmig verlaufende erste bzw. zweite Auskehlungen (22, 23) ausgebildet sind, wobei die ersten und zweiten Oberflächen (20, 21) des umlaufenden Randes der starren Schale axial zur Arbeitskammer (A) bzw. zur Ausgleichskammer (B) ausgerichtet sind, wobei diese beiden Oberflächen axial in dichtem Kontakt zwischen einteilig mit dem zweiten Mantel ausgebildeten ersten und zweiten ringförmigen Auflagerflächen (24; 7) bzw. (25;9; 16) eingespannt sind und wobei die ersten bzw. zweiten ringförmigen Auflagerflächen axial mindestens teilweise die ersten bzw. zweiten Auskehlungen abschließen und damit die ersten und zweiten Kanäle (26, 27) der Einschnürung bilden.

2. Vorrichtung nach Anspruch 1, wobei die starre Schale (18) ein metallisches Gußteil ist.

3. Vorrichtung nach einem der Ansprüche 1 und 2, wobei die starre Schale (18) in der Mitte ihres umlaufenden Dichtrandes ein Gitter (13) aufweist, das teilweise ein Ventilgehäuse zur Aufnahme des Trennventils (11) begrenzt und wobei das Trennventil in diesem Gehäuse gehalten wird durch eine weitgehendst ebene Platte (24; 25), die einerseits eine mit dem Trennventil korrespondierende mittlere Ausnehmung (12, 12a) und andererseits einen Randbereich aufweist, der eine der beiden axial gegen den umlaufenden Rand (19) der starren Schale eingespannten ringförmigen Lagerflächen bildet.

4. Vorrichtung nach Anspruch 3, weiter mit einer weitgehend ebenen zweiten starren Platte (25), die ebenfalls eines der beiden axial gegen den umlaufenden Rand (19) der starren Schale eingespannten ringförmigen Lagerflächen bildet, wobei die ersten und zweiten starren Platten (24, 25) beiderseits der starren Schale angeordnet sind.

5. Vorrichtung nach einem der vorstehenden Ansprüche, wobei die zweite ringförmige Lagerfläche durch eine metallische Scheibe (9) gebildet wird, welche auf dem Umfang der die Ausgleichskammer begrenzenden elastomeren Wand (8) befestigt ist.

6. Vorrichtung nach einem der Ansprüche 1 bis 5, wobei der zweite Mantel (3, 15) einen radialen ringförmigen Randwulst (16) aufweist, der axial gegen die zweite Oberfläche des umlaufenden Dichtrands der starren Schale eingespannt ist und die zweite ringförmige Lagerfläche bildet, wobei die die Ausgleichskammer bildende Wand (8) aus elastomerem Material außerdem eine Randzone aufweist, die zwischen der zweiten ringförmigen Lagerfläche (16) und der zweiten Oberfläche (21) des umlaufenden Rands der starren Schale angeordnet ist.

7. Vorrichtung nach einem der Ansprüche 1 bis 3, wobei die Ringbasis (5) des Körpers aus elastomerem Material eine Schulter (7) aufweist, welche die erste ringförmige Lagerfläche bildet.
